# EUROPEAN PATENT SPECIFICATION

(11) **EP 3 828 726 B1**
(45) Date of publication and mention of the grant of the patent: **16.10.2024**
(21) Application number: 20785424.1
(22) Date of filing: 11.08.2020
(51) Int. Cl.: G06F 16/22, B61L 19/06

(54) **INTERLOCKING DEVICE CONTROL METHOD AND SYSTEM**
VERFAHREN UND SYSTEM ZUR STEUERUNG VON STELLWERKEN
PROCÉDÉ ET SYSTÈME DE COMMANDE DE DISPOSITIF DE VERROUILLAGE

(30) Priority: 17.10.2019 CN 201910986659
(43) Date of publication of application: 02.06.2021
(73) Proprietor: CRSC RESEARCH & DESIGN INSTITUTE GROUP CO., LTD., Fengtai District Beijing 100070 (CN)
(72) Inventor: JIA, Jiyu, Beijing 100070 (CN); LI, Can, Beijing 100070 (CN); WANG, Ye, Beijing 100070 (CN)
(74) Representative: Haseltine Lake Kempner LLP
(86) International application number: PCT/CN2020/108402
(87) International publication number: WO 2021/073223

(56) References cited:
- CN-A- 102 874 279
- CN-A- 103 869 351
- CN-A- 107 563 004
- CN-A- 107 933 620
- CN-A- 109 703 604
- CN-A- 110 888 873
- GENG JIE ET AL: "Optimal algorithm of traversing railway yard based on graph searching", ADVANCED COMPUTER THEORY AND ENGINEERING (ICACTE), 2010 3RD INTERNATIONAL CONFERENCE ON, IEEE, PISCATAWAY, NJ, USA, 20 August 2010 (2010-08-20), pages V2 - 385, XP031758784, ISBN: 978-1-4244-6539-2

## Description

### TECHNICAL FIELD

The present invention relates to a field of transportation technology, and more particularly, to an interlocking device control method and system.

### BACKGROUND

With comprehensive construction of railways, transformation and upgrading of railway stations are indispensable; when a new device is in positional relation to a signal device in a station yard, two processing methods below are usually adopted: first, modifying a static data structure of device information, updating an existing interlocking table data structure, and adding new device information as well as a constraint relationship between the new device and the signal device to the interlocking table; second, making logical judgment in core logic of computer interlocking software according to a constraint relationship between a route and the signal device to acquire related information of the designated signal device, and acquiring the signal device in a station yard by indirect means.

The above-described two processing methods have disadvantages below: the existing interlocking table is manually compiled, so a compilation process is complicated and error-prone; when information stored in the interlocking table increases, corresponding interlocking table data also increases, occupying a lot of storage space, which is not favorable for improving reliability of an interlocking system; and due to diverse device types and different layout positions in the station yard, there are certain safety risks in acquiring and controlling a signal device in the station yard through the interlocking table.

### SUMMARY

With respect to the above-described problems, the present invention provides an interlocking device control method as defined in claim 1.

In embodiments of the invention, the method further comprises: traversing a vertex array table to acquire the vertex information corresponding to the vertex names of the route beginning point and of the route ending point;
Wherein, the vertex information includes one or more from the following: vertex type, vertex index value, and vertex coordinates.

Further, the sequentially acquiring information of respective adjacent points in a route direction includes:
Traversing an adjacent point array table to acquire information of an adjacent point of the route beginning point vertex in the route direction, according to a vertex index value of the route beginning point;
Judging whether the adjacent point is the route ending point vertex;
If the adjacent point is the route ending point vertex, outputting the adjacent point information;
If the adjacent point is not the route ending point vertex, outputting the adjacent point information, and taking the adjacent point as a second vertex;
Traversing the adjacent point array table to acquire information of an adjacent point of the second vertex in the route direction;
Re-judging whether the adjacent point is the route ending point vertex.

Further, the adjacent point information includes one or more from the following: adjacent point index value, section name, section index value, section direction, and furcation direction.

Further, the acquiring and controlling a signal device includes:
Determining an adjacent point index value in the adjacent point information;
Traversing the vertex array table to acquire a vertex name corresponding to the adjacent point index value;
Traversing a track demarcation point data structure table, to acquire signal information corresponding to the vertex name;
Acquiring and controlling a signal corresponding to the signal information.

The present invention further provides an interlocking device control system according to claim 6, comprising:
A vertex array module, configured to acquire vertex information of a route beginning point and of a route ending point, according to insulated joint information of the route beginning point and of the route ending point;
An adjacent point array module, configured to sequentially acquire information of respective adjacent points in a route direction, according to the vertex information of the route beginning point and of the route ending point; and
A control module, configured to acquire and control a signal device in the route direction, according to the adjacent point information.

Further, the vertex array module is configured to store a vertex array table;
The vertex array table includes a data and a firstarc;
The data is configured to store vertex names and/or vertex related information;
The firstarc is configured to store vertex index values.

Further, the adjacent point array module is configured to store an adjacent point array table;
The adjacent point array table includes an adjvex, a second data field, and a nextarc;
The adjvex is configured to store adjacent point index values;
The info is configured to store information of edges between vertices and adjacent points;
The nextarc is configured to store vertex index values or is empty.

Further, the control module includes a basic data storage unit and a signal control unit;
The basic data storage unit is configured to store a track demarcation point data structure table;
The track demarcation point data structure table includes one or more from the following: track demarcation point name, the number of signals, signal name, signal type, signal direction and section crossing type;
The signal control unit calls the vertex array module and the basic data storage unit, and acquires signal information corresponding to the adjacent point information through the vertex array table and the track demarcation point data structure table.

Further, the vertex array module finds out a vertex name corresponding to the adjacent point information through the vertex array table;
The basic data storage unit finds out signal information corresponding to the vertex name through the track demarcation point data structure table;
The signal control unit acquires a signal corresponding to the signal information in the interlocking system; and
The signal control unit controls operation of the signal.

The present invention adopts an adjacency list and a geographical structural diagram to construct a geographical model, for storing and managing signal device information and connection relationships between devices in a station yard, which saves data storage space; and information of a specific signal device in the station yard can be quickly found out through the geographical model, which is favorable for implementing modularization and standardization of interlocking software.

Other features and advantages of the present invention will be further explained in the following description, and partly become self-evident therefrom, or be understood through embodiments of the present invention.

### BRIEF DESCRIPTION OF THE DRAWINGS

In order to clearly illustrate the technical solution of the embodiments of the present invention or in the prior art, the drawings that need to be used in description of the embodiments or the prior art will be briefly described in the following; it is obvious that the described drawings are only related to some embodiments of the present invention; based on the drawings, those ordinarily skilled in the art can acquire other drawings, without any inventive work.
FIG 1 shows a schematic flow chart of a control method according to an embodiment of the present invention;
FIG 2 shows a signal layout diagram of station yard A according to the embodiment of the present invention;
FIG 3 shows a geographical structural diagram of station yard A according to the embodiment of the present invention;
FIG 4 shows a schematic diagram of a data and a info according to the embodiment of the present invention;
FIG 5 shows a schematic diagram of an adjacency list according to the embodiment of the present invention;
FIG 6 shows a schematic diagram of a track demarcation point data structure table and a switch data structure table according to the embodiment of the present invention; and
FIG 7 shows a schematic flow chart of acquiring information of all shunting signals in a route direction according to the embodiment of the present invention.

### DETAILED DESCRIPTION

In order to make objects, technical details and advantages of the embodiments of the present invention apparent, the technical solutions of the embodiment will be described in a clearly and fully understandable way in connection with the drawings related to the embodiments of the present invention. It is obvious that the described embodiments are just a part but not all of the embodiments of the present invention. Based on the described embodiments herein, those ordinarily skilled in the art can acquire other embodiment(s), without any inventive step. The scope of the invention is defined by the appended claims.

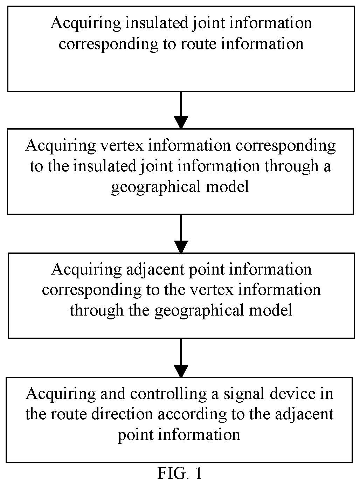

The present invention discloses an interlocking device control method, and exemplarily, as shown in FIG 1, the control method comprises steps of:
Step 1: acquiring insulated joint information corresponding to route information.

The route information of a train is determined; and a beginning point signal and an ending point signal of the route are determined according to the route information. Through a route interlocking table in an interlocking system, names of insulated joints corresponding to the beginning point signal and the ending point signal of the route are respectively acquired.

Specifically, the route interlocking table is configured to store information of all route signals in a station yard; and the route signal information includes a name of the route beginning point signal, the name of the insulated joint corresponding to the route beginning point signal, a name of the route ending point signal, and the name of the insulated joint corresponding to the route ending point signal.

Step 2: acquiring vertex information corresponding to the insulated joint information through a geographical model.

The geographical model proposed by the present invention includes a geographical structural diagram and an adjacency list. Specifically, the geographical structural diagram is an undirected graph, and the adjacency list stores signal device information and connection relationships between devices in a station yard. For example, the geographical model takes a track demarcation point (including an insulated joint and an axle counter) and a switch center point as vertices of the model graph, and takes a track connecting two vertices as an edge between the vertices.

At present, in research of station yard graph models at home and abroad, an undirected graph model includes a function point model and a bearing point model; a directed graph model includes a switch group vertex model, a track vertex model, and a route conflict model, etc. According to needs, different station yard graph models are selected for modeling, to achieve expected targets.

The function point model abstracts points having specific functions such as switches, crossover intersections, insulated joints, and siding tracks as vertices, to establish a railway station yard graph, which can represent the signal device information and the connection relationships in the station yard.

The bearing point model abstracts and defines devices with different attributes as jointing points, and abstracts a line between jointing points as a bearing point; and the lines have different attributes. The bearing point model is favorable for recording connection between devices with different attributes.

The switch group vertex model classifies switches that are inevitably used simultaneously into one group, to simplify calculation, which is favorable for calculating station throat accessibility.

A weight assignment mechanism of the track vertex model can effectively avoid detour route, and meanwhile, ensure that a parallel route is used as much as possible.

The route conflict model describes a conflict relationship between routes to facilitate calculating a degree of the conflict between routes, but lacks description of specific switches and line devices.

Usually, a graph structure may be represented in a computer by using an adjacency matrix, an adjacency list, an orthogonal list, an adjacency multi-list, an edge set array, etc.; different storage structures have their own advantages, disadvantages, and scopes of application. According to corresponding relationships between vertices and edges of the station yard graph model, it can be known that the station yard graph model is a graph structure with sparse edges. In order to reduce waste of storage space, the present invention adopts an adjacency list storage structure to store geographical data.

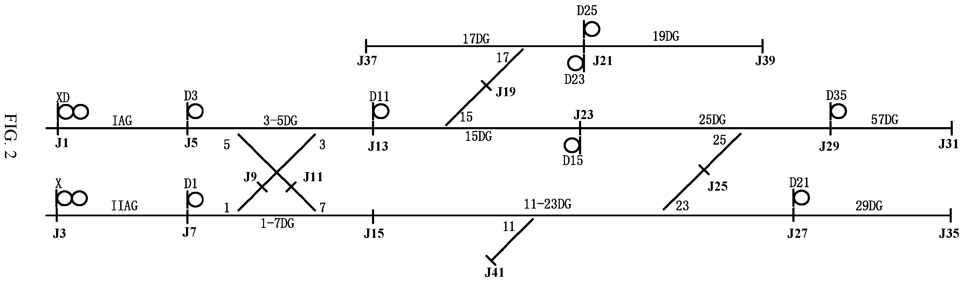

Exemplarily, FIG 2 shows a plane layout diagram of signals of station yard A; and the station yard includes sections, switches, signals, and insulated joints. As shown in FIG 2, the station yard includes three track lines, of which a first track line includes section 17DG, section 19DG, insulated joint J37, insulated joint J21, insulated joint J39, signal D23, signal D25 and switch 17. Signal D23 and signal D25 are arranged at insulated joint J21.

A second track line includes section IAG, section 3-5DG, section 15DG, section 25DG, section 57DG, insulated joint 11, insulated joint J5, insulated joint J13, insulated joint J23, insulated joint J29, insulated joint J31, signal XD, signal D3, signal D11, signal D15, signal D35, switch 3, switch 5 and switch 25. Signal XD is arranged at insulated joint J1, signal D3 is arranged at insulated joint J5, signal D11 is arranged at insulated joint J13, signal D15 is arranged at insulated joint J23, and signal D35 is arranged at signal D35.

A third track line includes section IIAG, section 1-7DG, section 11-23DG, section 29DG, insulated joint J3, insulated joint J7, insulated joint J15, insulated joint J27, insulated joint J35, signal X, signal D1, signal D21, switch 1, switch 7, switch 11, and switch 23. Signal X is arranged at insulated joint J3, signal D1 is arranged at insulated joint J7, and signal D21 is arranged at insulated joint J27.

A branch of switch 17 is connected with a branch of switch 15, and a line between switch 17 and switch 15 is provided thereon with insulated joint J19; a branch of switch 5 is connected with a branch of switch 7, and a line between switch 5 and switch 7 is provided thereon with insulated joint J11; a branch of switch 3 is connected with a branch of switch 1, and a line between switch 3 and switch 1 is provided thereon with insulated joint J9; a branch of switch 25 is connected with a branch of switch 23, and a line between switch 25 and switch 23 is provided thereon with insulated joint J25; and a branch of switch 11 is provided thereon with insulated joint J41.

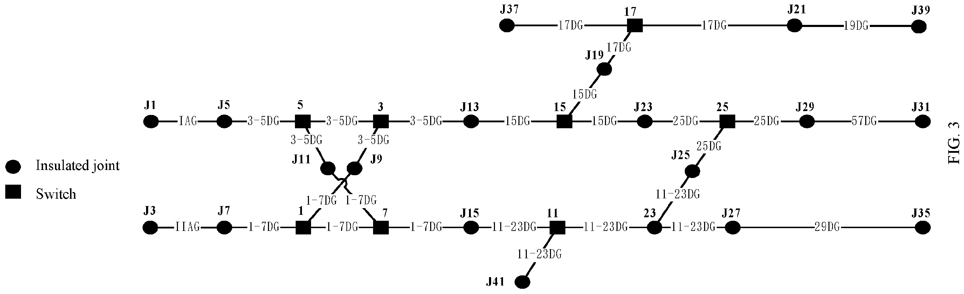

The vertices in the geographical structural diagram include but are not limited to track demarcation points (including insulated joints and axle counters) and switch center points. Exemplarily, as shown in FIG 3, in the geographical structural diagram of station yard A, the insulated joints and the switch center points are taken as vertices. When an insulated joint is taken as a vertex, the number of adjacent points thereof is 1 or 2; and when a switch is taken as a vertex, the number of adjacent points thereof is 3.

Exemplarily, as shown in FIG 3, "J1" represents insulated joint J1 and meanwhile, represents vertex J1; "5" represents switch 5 and meanwhile, represents vertex 5; "19DG" represents section 19DG, and meanwhile, represents edge 19DG

Specifically, the adjacency list provided by the present invention includes a vertex array table and an adjacent point array table.

The vertex array table includes a data and a firstarc. Wherein, the data is configured to store vertex names and/or vertex related information; and the firstarc is configured to store vertex index values.

The adjacent point array table includes an adjvex, a info, and a nextarc. Wherein, the adjvex is configured to store adjacent point index values corresponding to respective vertices; the info is configured to store information of edges (including information of sections and track circuits) between respective vertices and adjacent points thereof; and the nextarc is configured to store vertex index values or is empty.

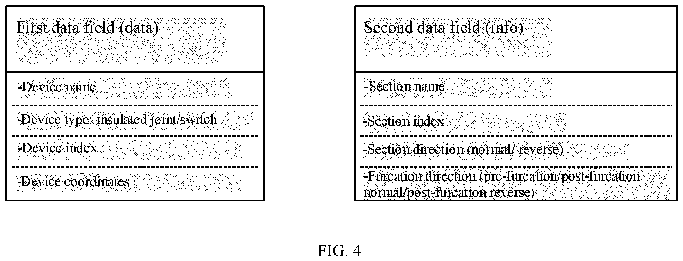

Exemplarily, as shown in FIG 4, the data of the vertex array table is configured to store one or more from the following: device name, device type (insulated joint or switch), device index value, device coordinates, and other data. The info of the adjacent point array table is configured to store one or more from the following: section name, section index value, section direction (normal direction or reverse direction) and furcation direction (pre-furcation or post-furcation normal or post-furcation reverse).

Exemplarily, the number of rows of the vertex array table is the same as the number of rows of the adjacent point array table; and respective rows of the vertex array table correspond to respective rows of the adjacent point array table. The vertex information is stored in the vertex array table; and information of an adjacent point corresponding to each vertex and information of an edge between the vertex and the adjacent point are stored in a corresponding row of the adjacent point array table.

Specifically, an index value of the adjacent point is consistent with an index value of the vertex, that is, the devices in the station yard each have only one index value; when the device is taken as a vertex, the index value is the vertex index value; and when the device is taken as an adjacent point, the index value is taken as an adjacent point index value.

Specifically, if the vertex corresponding to the current adjacent point also has other adjacent point, then the nextarc of the adjacent point array table of the current adjacent point stores the vertex index value, which provides index reference for other adjacent point; if the vertex corresponding to the current adjacent point has no other adjacent point, the nextarc in the adjacent point array table of the current adjacent point is empty.

On a basis of the existing interlocking table, the present invention proposes a computer interlocking geographical model based on the geographical structural diagram and the adjacency list. The model stores the signal device information and the connection relationships between the devices in the station yard, which effectively avoids frequent updates of the interlocking table data structure, reduces a data storage amount of the interlocking software, and improves reliability of the interlocking system.

Step 3: acquiring the adjacent point information corresponding to the vertex information through the geographical model.

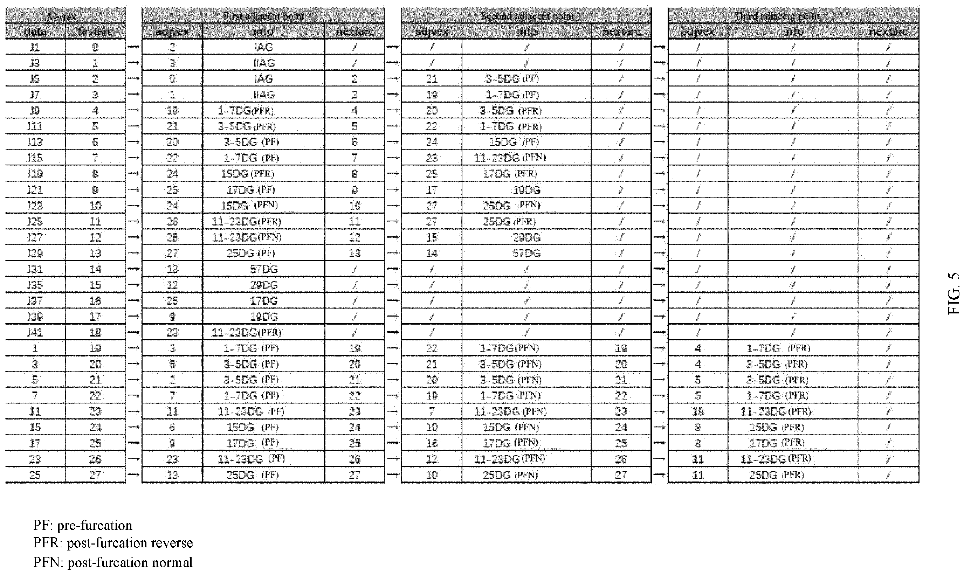

In the above-described adjacency list storing mode, the device information in the geographical structural diagram is sequentially configured into the vertex array table and the adjacent point array table. Exemplarily, FIG 5 shows a schematic diagram of an adjacency list corresponding to the geographical structural diagram of station yard A. Wherein, the data of the vertex array table stores related information of the insulated joints and the switches in the station yard; and the firstarc (firstarc) stores the vertex index values corresponding to the insulated joints or the switches. In the geographical structural diagram, each vertex may be connected with at most three vertices, so there are at most three items of adjacent point array table information corresponding to the vertex. When an insulated joint is taken as a vertex, the number of items of adjacent point array table information thereof is 1 or 2; when a switch is taken as a vertex, the number of items of adjacent point array table information thereof is 3.

For example, with respect to switch 5 in station yard A, in the vertex array table, a vertex name "5" is stored in the data , and a vertex index value "21" of vertex 5 (switch 5) is stored in the firstarc . It can be seen from FIG 5 that, vertex information of vertex 5 (switch 5) is stored in row "21" of the vertex array table; and information of adjacent points of vertex 5 (switch 5), as well as information of edges between vertex 5 (switch 5) and the adjacent points thereof are all stored in row "21". In a first adjacent point array table, an adjvex and a info corresponding to row "21" are found. An adjacent point index value stored in the adjvex is "2"; and edge information stored in the info is "3-5DDG (pre-furcation)". By indexing the vertex information whose vertex index value is "2" in the vertex array table, it can be known that the vertex index value "2" corresponds to vertex J5 (insulated joint J5). Therefore, a first item of adjacent point information of switch 5 is as follows: device name of adjacent point: insulated joint J5; name of section between switch 5 and insulated joint J5: track circuit 3-5DDG; and furcation direction of track circuit 3-5DDG: "pre-furcation".

Since the vertex index value "21" is stored in the nextarc of the first adjacent point array table, it indicates that switch 5 has other adjacent point besides insulated joint J5. It can be seen from FIG 5 that, in a second adjacent point array table, an adjvex and a info corresponding to row "21" are found. An adjacent point index value stored in the adjvex is "20", and edge information stored in the info is "3-5DDG (post-furcation normal)". Through the vertex array table, it can be found that, a vertex corresponding to the adjacent point index value "20" is: switch 3. Therefore, a second item of adjacent point information of switch 5 is as follows: device name of adjacent point: switch 3; name of section between switch 5 and switch 3: track circuit 3-5DDG; and furcation direction of track circuit 3-5DDG: "post-furcation normal".

Since the vertex index value "21" is stored in the nextarc of the second adjacent point array table, switch 5 has other adjacent point besides insulated joint J5 and switch 3. It can be seen from FIG 5 that, in a third adjacent point array table, an adjacent point index value stored in an adjvex corresponding to row "21" is found to be "5", and corresponding edge information stored in a info is "3-5DDG (post-furcation reverse)". Through the vertex array table, insulated joint 11 corresponding to the adjacent point index value "5" may be found out. Therefore, a third item adjacent point information of switch 5 is as follows: device name of adjacent point: insulated joint 11; name of section between switch 5 and insulated joint 11: track circuit 3-5DDG; and furcation direction of track circuit 3-5DDG: "post-furcation reverse".

Since a nextarc of the third adjacent point array table is empty, it indicates switch 5 have no other adjacent point except for insulated joint J5, switch 3 and insulated joint 11.

Step 4: acquiring and controlling the signal device in the route direction according to the adjacent point information.

There are mainly three types of objects processed by the interlocking software: signals, switches and sections. Signal device information in the station yard is included in a track demarcation point data structure, switch information is included in a switch device data structure, and section information is included in an adjacent point data structure. The device information in the station yard is all stored in a basic device signal table.

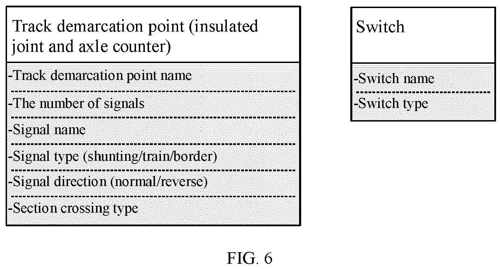

Exemplarily, as shown in FIG 6, the basic device signal table includes, but is not limited to, a track demarcation point (including insulated joint and axle counter) data structure table and a switch data structure table. The track demarcation point (including insulated joint and axle counter) data structure table includes: one or more from the following: track demarcation point name, the number of signals, signal name, signal type (shunting or train or border), signal direction (normal direction or reverse direction), and section crossing type. The switch data structure table includes: one or more from the following: switch name and switch type.

Through device name in the data of the vertex array table, information of a specified signal device can be found out in the basic device signal table. The data fields of vertices and adjacent points store signal device related information; and according to the information and a connection relationship of the signal devices, a specific signal device in the station yard may be quickly and accurately acquired and controlled.

The geographical model proposed by the present invention adopts the storage structure of the geographical structural diagram and the adjacency list, can accurately and quickly acquire information of a specific signal device in the station yard, and can improve safety of the interlocking system.

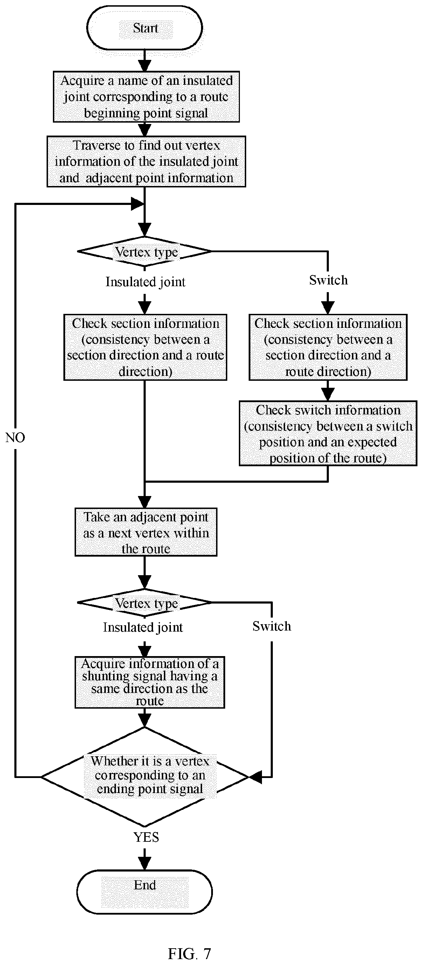

Exemplarily, as shown in FIG 7, FIG 7 shows a schematic flow chart of acquiring information of all shunting signals in the route direction.

Before a train enters the station, a station attendant determines route information, the interlocking system determines information of corresponding route beginning and ending point signals according to the route information; and names of insulated joints corresponding to the route beginning and ending point signals are respectively acquired through the route interlocking table. The name of the insulated joint corresponding to the route beginning point signal is set as a beginning point insulated joint, the beginning point insulated joint is a beginning point vertex; the name of the insulated joint corresponding to the route ending point signal is set as an ending point insulated joint, and the ending point insulated joint is an ending point vertex.

Further, the adjacency list of the geographical model is traversed to find out information corresponding to the beginning point vertex; specifically, by traversing, vertex information of the beginning point vertex is found out in the vertex array table; and first adjacent point information of the beginning point vertex is found out in the adjacent point array table. Specifically, the vertex information includes device name, device type, vertex index value, and device coordinates of the beginning point vertex; the first adjacent point information includes first adjacent point name, first adjacent point index value, and information of first section between first adjacent point and first insulated joint.

The first adjacent point is taken as a pending vertex; and the vertex array table is traversed to find information of the pending vertex. The pending vertex information includes device name, device type, vertex index value and device coordinates of the pending vertex.

The device type of the beginning point vertex is judged.

If the beginning point vertex is an insulated joint, the first section information is checked. For example, it is judged whether a section direction of the first section is consistent with the route direction.

If consistent, the pending vertex is taken as a second vertex.

If inconsistent, information of other adjacent point of the beginning point vertex is checked until a section direction corresponding to an adjacent point thereof is consistent with the route direction, and the eligible adjacent point is taken as the second vertex.

If the beginning point vertex is a switch, the first section information is checked. For example, it is checked whether the section direction of the first section is consistent with the route direction.

If the section direction of the first section is consistent with the route direction, the pending vertex is selected, to proceed to a next step;

If the section direction of the first section is inconsistent with the route direction, information of other adjacent points of the beginning point vertex is checked, until a section direction corresponding to an adjacent point thereof is consistent with the route direction, and the eligible adjacent point is selected as a pending vertex, to proceed to a next step.

The switch information is checked. For example, it is checked whether a position where the switch is located is consistent with an expected position of the route.

If consistent, the pending vertex is taken as the second vertex.

If inconsistent, other adjacent points of the beginning point vertex is checked, i.e., information of other adjacent points of the first insulated joint is checked, until a section direction corresponding to an adjacent point thereof is consistent with the route direction, and the position where the switch is located is consistent with the expected position of the route; and the eligible adjacent point is selected as the second vertex.

By traversing, vertex information of the second vertex is found out in the vertex array table. Specifically, the vertex information includes device name, device type, vertex index value, and device coordinates of the second vertex.

The device type of the second vertex is judged.

If the second vertex is an insulated joint, then according to the device name of the second vertex, information of a signal in a position of the second vertex that has the same direction as the route is found out in the track demarcation point data structure table; and the signal information is shunting signal information. It is judged whether the second vertex is the ending point vertex.

If the second vertex is a switch, it is judged whether the second vertex is the ending point vertex. For example, it is judged whether a vertex index value of the second vertex is the same as a vertex index value of the ending point vertex.

If the same, that is, the second vertex is the ending point vertex, the shunting signal information is output.

If not the same, that is, the second vertex is not the ending point vertex, information of an adjacent point of the second vertex is found out in the adjacent point array table, and the adjacent point of the second vertex is taken as a pending vertex, to repeat the above-described steps.

The above-described steps are executed by using the geographical model, so that information of all shunting signals in the route direction may be quickly found out, so as to implement rapid call and control of a corresponding signal, and improve accuracy and safety of the interlocking system.

In order to implement the above-described control method, the present invention further provides an interlocking device control system, comprising:
A vertex array module, configured to acquire vertex information of the route beginning point and of the route ending point, according to insulated joint information of the route beginning point and of the route ending point;
An adjacent point array module, configured to sequentially acquire information of respective adjacent points in a route direction, according to the vertex information of the route beginning point and of the route ending point; and
A control module, configured to acquire and control a signal device in the route direction, according to the adjacent point information.

Specifically, the vertex array module is configured to store a vertex array table;
The vertex array table includes a data and a firstarc;
The data is configured to store vertex names and/or vertex related information;
The firstarc is configured to store vertex index values.

The adjacent point array module is configured to store an adjacent point array table;
The adjacent point array table includes an adjvex, a second data field, and a nextarc;
The adjvex is configured to store adjacent point index values;
The info is configured to store information of edges between vertices and adjacent points;
The nextarc is configured to store vertex index values or is empty.

The control module includes a basic data storage unit and a signal control unit;
The basic data storage unit is configured to store a track demarcation point data structure table;
The track demarcation point data structure table includes track demarcation point name, the number of signals, signal name, signal type, signal direction and section crossing type;
The signal control unit may call the vertex array module and the basic data storage unit, and acquire signal information corresponding to the adjacent point information through the vertex array table and the track demarcation point data structure table.

Exemplarily, the signal control unit sends the adjacent point information to the vertex array module;
The vertex array module finds out a vertex name corresponding to the adjacent point information through the vertex array table;
The signal control unit acquires and sends the vertex name to the basic data storage unit;
The basic data storage unit finds out signal information corresponding to the vertex name through the track demarcation point data structure table;
The signal control unit acquires the signal information, and acquires the signal corresponding to the signal information in the interlocking system; and
The signal control unit controls operation of the signal.

The geographical model provided by the present invention includes the geographical structural diagram and the adjacency list structure, so that storage space occupied by data can be saved, and the station yard graph and the interlocking relationship are easily modified. The geographical data structure is a chained list of each element in the vertex array; and the attributes of the vertices in the station yard are limited. The number of vertices and stored contents thereof are unchanged; and links between vertices are only logically ordered, but a specific physical address of each vertex in computer memory may be disordered. Such a data structure may adopt computer-aided design methods to generate interlocking data and find information of a specific signal device in the station yard, which is favorable for implementing modularization and standardization of the interlocking software. Since the core logic of the interlocking software is independent of data, it is universal for different station yards and modules, and the design may be completed only by modifying data of the station yards.

By designing the geographical structural diagram and establishing the adjacency list structure, the specific signal device in the station yard can be found out reliably and safely, which may avoid frequent updates of the interlocking table data structure, reduce possibility of errors in a data configuration process, reduce storage space occupied by interlocking table, improve reliability of the interlocking system; and meanwhile, can also avoid abnormal situations during complex logic operations to acquire specific signal device information, and improve safety of the interlocking system.

Although the present invention has been described in detail with reference to the foregoing embodiments, those of ordinary skill in the art should understand that they can still modify the technical solutions described in the foregoing embodiments, or equivalently replace some of the technical features.

## Claims

1. An interlocking device control method, comprising:
acquiring insulated joint information corresponding to route information, including derterming a beginning-point signal device and an ending-point signal device of the route according to the route information, and acquiring names of insulated joints corresponding to the beginning-point signal device and the ending-point signal device through a route interlocking table;
through a geographical model, acquiring vertex information of a route beginning point and of a route ending point corresponding to the insulated joint information; wherein the geographical model includes a geographical structural diagram and an adjacency list, wherein the geographical structural diagram is an undirected graph, and the adjacency list stores signal device information and connection relationships between devices, and the adjacency list includes a vertex array table and an adjacent point array table;
through the geographical model, sequentially acquiring information of each adjacent point in a route direction, according to the vertex information of the route beginning point and of the route ending point; and
acquiring and controlling a signal device in the route direction, according to the adjacent point information.

2. The control method according to claim 1, wherein,
the acquiring vertex information of the route beginning point and of the route ending point includes:
traversing the vertex array table to acquire the vertex information corresponding to the vertex names of the route beginning point and of the route ending point;
the vertex information includes one or more from the following: vertex type, vertex index value, and vertex coordinates.

3. The control method according to claim 2, wherein,
the sequentially acquiring information of each adjacent point in a route direction includes:
traversing the adjacent point array table to acquire information of an adjacent point of the route beginning point vertex in the route direction, according to a vertex index value of the route beginning point;
judging whether the adjacent point is the route ending point vertex;
if the adjacent point is the route ending point vertex, outputting the adjacent point information;
if the adjacent point is not the route ending point vertex, outputting the adjacent point information, and taking the adjacent point as a second vertex;
traversing the adjacent point array table to acquire information of an adjacent point of the second vertex in the route direction; and
re-judging whether the adjacent point is the route ending point vertex.

4. The control method according to claim 1 or 3, wherein,
the adjacent point information includes one or more from the following: adjacent point index value, section name, section index value, section direction, and furcation direction.

5. The control method according to claim 4, wherein,
the acquiring and controlling a signal device includes:
determining an adjacent point index value in the adjacent point information;
traversing the vertex array table to acquire a vertex name corresponding to the adjacent point index value;
traversing a track demarcation point data structure table, to acquire signal device information corresponding to the vertex name; and
acquiring and controlling a signal device corresponding to the signal device information.

6. An interlocking device control system, comprising means for carry out the method of any of claims 1 to 5:
a vertex array module, configured to acquire vertex information of a route beginning point and of a route ending point, according to insulated joint information of the route beginning point and of the route ending point;
an adjacent point array module, configured to sequentially acquire information of each adjacent point in a route direction, according to the vertex information of the route beginning point and of the route ending point; and
a control module, configured to acquire and control a signal device in the route direction, according to the adjacent point information.

7. The control system according to claim 6, wherein,
the vertex array module is configured to store a vertex array table;
the vertex array table includes a first data field and a first arc field;
the first data field is configured to store vertex names and/or vertex related information;
the first arc field is configured to store vertex index values.

8. The control system according to claim 7, wherein,
the adjacent point array module is configured to store an adjacent point array table;
the adjacent point array table includes an adjacent point field, a second data field, and a second arc field;
the adjacent point field is configured to store adjacent point index values;
the second data field, is configured to store information of edges between vertices and adjacent points; and
the second arc field is configured to store vertex index values or is empty.

9. The control system according to claim 6 or 8, wherein,
the control module includes a basic data storage unit and a signal-device control unit;
the basic data storage unit is configured to store a track demarcation point data structure table;
the track demarcation point data structure table includes one or more from the following: track demarcation point name, the number of signal devices, signal device name, signal device type, signal device direction and section crossing type;
the signal-device control unit instructs the vertex array module and the basic data storage unit, to acquire signal device information corresponding to the adjacent point information through the vertex array table and the track demarcation point data structure table.

10. The control system according to claim 9, wherein,
the vertex array module finds out a vertex name corresponding to the adjacent point information through the vertex array table;
the basic data storage unit finds out signal information corresponding to the vertex name through the track demarcation point data structure table;
the signal-device control unit acquires a signal device corresponding to the signal device information in the interlocking system; and
the signal control unit controls operation of the signal device.

## Patentansprüche

1. Verfahren zum Steuern von Stellwerken, umfassend:
Erlangen von Isolierstoßinformationen, die Streckeninformationen entsprechen, beinhaltend Bestimmen einer Anfangspunkt-Signaleinrichtung und einer Endpunkt-Signaleinrichtung der Strecke gemäß den Streckeninformationen und Erlangen von Namen von isolierten Verbindungsstellen, die der Anfangspunkt-Signaleinrichtung und der Endpunkt-Signaleinrichtung entsprechen, durch eine Streckenstellwerkstabelle;
Erlangen von Scheitelpunktinformationen eines Streckenanfangspunkts und eines Streckenendpunkts, die den Isolierstoßinformationen entsprechen, durch ein geographisches Modell; wobei das geographische Modell ein geographisches Strukturdiagramm und eine Adjazenzliste beinhaltet, wobei das geographische Strukturdiagramm ein ungerichteter Graph ist und die Adjazenzliste Signaleinrichtungsinformationen und Verbindungsbeziehungen zwischen Einrichtungen speichert und die Adjazenzliste eine Scheitelpunktanordnungstabelle und eine Nachbarpunktanordnungstabelle beinhaltet;
sequenzielles Erlangen von Informationen jedes benachbarten Punkts in einer Streckenrichtung gemäß den Scheitelpunktinformation des Streckenanfangspunkts und des Streckenendpunkts durch das geographische Modell; und
Erlangen und Steuern einer Signaleinrichtung in der Streckenrichtung gemäß den Nachbarpunktinformationen.

2. Steuerverfahren nach Anspruch 1, wobei
das Erlangen der Scheitelpunktinformationen des Streckenanfangspunkts und des Streckenendpunkts Folgendes beinhaltet:
Durchlaufen der Scheitelpunktanordnungstabelle, um die Scheitelpunktinformationen zu erlangen, die den Scheitelpunktnamen des Streckenanfangspunkts und des Streckenendpunkts entsprechen;
wobei die Scheitelpunktinformationen eines oder mehrere von Folgenden beinhalten: Scheitelpunkttyp, Scheitelpunktindexwert und Scheitelpunktkoordinaten.

3. Steuerverfahren nach Anspruch 2, wobei
das sequenzielle Erlangen von Informationen jedes benachbarten Punkts in einer Streckenrichtung Folgendes beinhaltet:
Durchlaufen der Nachbarpunkanordnungstabelle, um Informationen eines benachbarten Punkts des Scheitelpunkts des Streckenanfangspunkts in der Streckenrichtung gemäß einem Scheitelpunktindexwert des Streckenanfangpunkts zu erlangen;
Beurteilen, ob der benachbarte Punkt der Scheitelpunkt des Streckenendpunkts ist;
wenn der benachbarte Punkt der Scheitelpunkt des Streckenendpunkts ist, Ausgeben der Nachbarpunktinformationen;
wenn der benachbarte Punkt nicht der Scheitelpunkt des Streckenendpunkts ist, Ausgeben der Nachbarpunktinformationen und Heranziehen des benachbarten Punkts als zweiten Scheitelpunkt;
Durchlaufen der Nachbarpunktanordnungstabelle, um Informationen eines benachbarten Punkts des zweiten Scheitelpunkts in der Streckenrichtung zu erlangen; und
erneutes Beurteilen, ob der benachbarte Punkt der Scheitelpunkt des Streckenendpunkts ist.

4. Steuerverfahren nach Anspruch 1 oder 3, wobei
die Nachbarpunktinformationen eines oder mehrere von Folgenden beinhalten: Nachbarpunktindexwert, Abschnittsname, Abschnittsindexwert, Abschnittsrichtung und Verzweigungsrichtung.

5. Steuerverfahren nach Anspruch 4, wobei
das Erlangen und Steuern einer Signaleinrichtung Folgendes beinhaltet:
Bestimmen eines Nachbarpunktindexwerts in den Nachbarpunktinformationen;
Durchlaufen der Scheitelpunktanordnungstabelle, um einen Scheitelpunktnamen zu erlangen, der dem Nachbarpunktindexwert entspricht;
Durchlaufen einer Gleisbegrenzungspunkt-Datenstrukturtabelle, um Signaleinrichtungsinformationen zu erlangen, die dem Scheitelpunktnamen entsprechen; und
Erlangen und Steuern einer den Signaleinrichtungsinformationen entsprechenden Signaleinrichtung.

6. Steuersystem für Stellwerke, umfassend Mittel zum Durchführen des Verfahrens nach einem der Ansprüche 1 bis 5:
ein Scheitelpunktanordnungsmodul, das dazu konfiguriert ist, Scheitelpunktinformationen eines Streckenanfangspunkts und eines Streckenendpunkts gemäß Isolierstoßinformationen des Streckenanfangspunkts und des Streckenendpunkts zu erlangen;
ein Nachbarpunktanordnungsmodul, das dazu konfiguriert ist, sequenziell Informationen jedes benachbarten Punkts in einer Streckenrichtung gemäß den Scheitelpunktinformationen des Streckenanfangspunkts und des Streckenendpunkts zu erlangen; und
ein Steuermodul, das dazu konfiguriert ist, eine Signaleinrichtung in der Streckenrichtung gemäß der Nachbarpunktinformation zu erlangen und zu steuern.

7. Steuersystem nach Anspruch 6, wobei
das Scheitelpunktanordnungsmodul dazu konfiguriert ist, eine Scheitelpunktanordnungstabelle zu speichern;
die Scheitelpunktanordnungstabelle ein erstes Datenfeld und ein erstes Bogenfeld beinhaltet;
das erste Datenfeld dazu konfiguriert ist, Scheitelpunktnamen und/oder scheitelpunktbezogene Informationen zu speichern;
das erste Bogenfeld dazu konfiguriert ist, Scheitelpunktindexwerte zu speichern.

8. Steuersystem nach Anspruch 7, wobei
das Nachbarpunktanordnungsmodul dazu konfiguriert ist, eine Nachbarpunktanordnungstabelle zu speichern;
die Nachbarpunktanordnungstabelle ein Nachbarpunktfeld, ein zweites Datenfeld und ein zweites Bogenfeld beinhaltet;
das Nachbarpunktfeld dazu konfiguriert ist, Nachbarpunktindexwerte zu speichern;
das zweite Datenfeld dazu konfiguriert ist, Informationen von Kanten zwischen Scheitelpunkten und benachbarten Punkten zu speichern; und
das zweite Bogenfeld dazu konfiguriert ist, Scheitelpunktindexwerte zu speichern, oder leer ist.

9. Steuersystem nach Anspruch 6 oder 8, wobei
das Steuermodul eine Basisdatenspeichereinheit und eine Signaleinrichtungssteuereinheit beinhaltet;
die Basisdatenspeichereinheit dazu konfiguriert ist, eine Gleisbegrenzungspunkt-Datenstrukturtabelle zu speichern;
die Gleisbegrenzungspunkt-Datenstrukturtabelle eines oder mehrere von Folgenden beinhaltet: Gleisbegrenzungspunktname, Anzahl der Signaleinrichtungen, Signaleinrichtungname, Signaleinrichtungstyp, Signaleinrichtungsrichtung und Abschnittsüberquerungstyp;
die Signaleinrichtungssteuereinheit das Scheitelpunktanordnungsmodul und die Basisdatenspeichereinheit anweist, Signaleinrichtungsinformationen, die den Nachbarpunktinformationen entsprechen, durch die Scheitelpunktanordnungstabelle und die Gleisbegrenzungspunkt-Datenstrukturtabelle zu erlangen.

10. Steuersystem nach Anspruch 9, wobei
das Scheitelpunktanordnungsmodul durch die Scheitelpunktanordnungstabelle einen Scheitelpunktnamen ermittelt, der den Nachbarpunktinformationen entspricht;
die Basisdatenspeichereinheit durch die Gleisbegrenzungspunkt-Datenstrukturtabelle Signalinformationen ermittelt, die dem Scheitelpunktnamen entsprechen;
die Signaleinrichtungssteuereinheit eine Signaleinrichtung erlangt, die den Signaleinrichtungsinformationen in dem Stellwerksystem entspricht; und
die Signalsteuereinheit den Betrieb der Signaleinrichtung steuert.

## Revendications

1. Procédé de commande de dispositif de verrouillage, comprenant :
l'acquisition d'informations de joint isolé correspondant à des informations d'itinéraire, y compris la détermination d'un dispositif de signalisation de point de départ et d'un dispositif de signalisation de point d'arrivée de l'itinéraire selon les informations d'itinéraire, et l'acquisition de noms de joints isolés correspondant au dispositif de signalisation de point de départ et au dispositif de signalisation de point d'arrivée par l'intermédiaire d'une table de verrouillage d'itinéraire ;
par l'intermédiaire d'un modèle géographique, l'acquisition d'informations de sommet d'un point de départ d'itinéraire et d'un point d'arrivée d'itinéraire correspondant aux informations de joint isolé ; dans lequel le modèle géographique comporte un diagramme structurel géographique et une liste d'adjacence, dans lequel le diagramme structurel géographique est un graphe non orienté, et la liste d'adjacence stocke des informations de dispositif de signalisation et des relations de connexion entre des dispositifs, et la liste d'adjacence comporte une table de réseau de sommet et une table de réseau de points adjacents ;
au moyen du modèle géographique, l'acquisition séquentielle d'informations sur chaque point adjacent dans une direction d'itinéraire, selon les informations de sommet du point de départ d'itinéraire et du point d'arrivée d'itinéraire ; et
l'acquisition et la commande d'un dispositif de signalisation dans la direction d'itinéraire, selon les informations de point adjacent.

2. Procédé de commande selon la revendication 1, dans lequel, l'acquisition d'informations de sommet du point de départ d'itinéraire et du point d'arrivée d'itinéraire comporte :
le fait de parcourir la table de réseau de sommet pour acquérir les informations de sommet correspondant aux noms de sommet du point de départ d'itinéraire et du point d'arrivée d'itinéraire ;
les informations de sommet comportent un ou plusieurs des éléments suivants : type de sommet, valeur d'index de sommet et coordonnées de sommet.

3. Procédé de commande selon la revendication 2, dans lequel, l'acquisition séquentielle d'informations sur chaque point adjacent dans une direction d'itinéraire comporte :
le fait de parcourir la table de réseau de points adjacents pour acquérir des informations sur un point adjacent du sommet de point de départ d'itinéraire dans la direction d'itinéraire, selon une valeur d'index de sommet du point de départ d'itinéraire ;
le fait de juger si le point adjacent est le sommet de point d'arrivée d'itinéraire ;
si le point adjacent est le sommet de point d'arrivée d'itinéraire, le fait de délivrer les informations de point adjacent ;
si le point adjacent n'est pas le sommet de point d'arrivée d'itinéraire, le fait de délivrer les informations de point adjacent et la prise du point adjacent comme second sommet ;
le fait de parcourir la table réseau de points adjacents pour acquérir des informations sur un point adjacent du second sommet dans la direction d'itinéraire ; et
le fait de juger si le point adjacent est le sommet de point d'arrivée d'itinéraire.

4. Procédé de commande selon la revendication 1 ou 3, dans lequel,
les informations de point adjacent comportent un ou plusieurs des éléments suivants : valeur d'index de point adjacent, nom de section, valeur d'index de section, direction de section et direction de furcation.

5. Procédé de commande selon la revendication 4, dans lequel, l'acquisition et la commande d'un dispositif de signalisation comportent :
la détermination d'une valeur d'index de point adjacent dans les informations de point adjacent ;
le fait de parcourir la table de réseau de sommet pour acquérir un nom de sommet correspondant à la valeur d'index de point adjacent ;
le fait de parcourir une table de structure de données de point de démarcation de piste, pour acquérir des informations de dispositif de signalisation correspondant au nom de sommet ; et
l'acquisition et la commande d'un dispositif de signalisation correspondant aux informations de dispositif de signalisation.

6. Système de commande de dispositif de verrouillage, comprenant un moyen pour mettre en œuvre le procédé selon l'une quelconque des revendications 1 à 5 :
un module de réseau de sommet, configuré pour acquérir des informations de sommet d'un point de départ d'itinéraire et d'un point d'arrivée d'itinéraire, selon des informations de joint isolé du point de départ d'itinéraire et du point d'arrivée d'itinéraire ;
un module de réseau de points adjacents, configuré pour acquérir séquentiellement des informations de chaque point adjacent dans une direction d'itinéraire, selon les informations de sommet du point de départ d'itinéraire et du point d'arrivée d'itinéraire ; et
un module de commande, configuré pour acquérir et commander un dispositif de signalisation dans la direction d'itinéraire, selon les informations de point adjacent.

7. Système de commande selon la revendication 6, dans lequel,
le module de réseau de sommet est configuré pour stocker une table de réseau de sommet ;
la table de réseau de sommet comporte un premier champ de données et un premier champ d'arc ;
le premier champ de données est configuré pour stocker des noms de sommet et/ou des informations relatives au sommet ;
le premier champ d'arc est configuré pour stocker des valeurs d'index de sommet.

8. Système de commande selon la revendication 7, dans lequel,
le module de réseau de points adjacents est configuré pour stocker une table de réseau de points adjacents ;
la table de réseau de points adjacents comporte un champ de points adjacents, un second champ de données et un second champ d'arc ;
le champ de points adjacents est configuré pour stocker des valeurs d'index de points adjacents ;
le second champ de données est configuré pour stocker des informations d'arêtes entre des sommets et des points adjacents ; et
le second champ d'arc est configuré pour stocker les valeurs d'index de sommet ou est vide.

9. Système de commande selon la revendication 6 ou 8, dans lequel,
le module de commande comporte une unité de stockage de données de base et une unité de commande de dispositif de signalisation ;
l'unité de stockage de données de base est configurée pour stocker une table de structure de données de point de démarcation de piste ;
la table de structure de données de point de démarcation de piste comporte un ou plusieurs des éléments suivants : nom de point de démarcation de piste, le nombre de dispositifs de signalisation, nom de dispositif de signalisation, type de dispositif de signalisation, direction de dispositif de signalisation et type de croisement de section ;
l'unité de commande de dispositif de signalisation ordonne au module de réseau de sommet et à l'unité de stockage de données de base d'acquérir des informations de dispositif de signalisation correspondant aux informations de point adjacent via la table de réseau de sommet et la table de structure de données de point de démarcation de piste.

10. Système de commande selon la revendication 9, dans lequel, le module de réseau de sommet recherche un nom de sommet correspondant aux informations de point adjacent via la table de réseau de sommet ;
l'unité de stockage de données de base recherche des informations de signal correspondant au nom de sommet via la table de structure de données de point de démarcation de piste ;
l'unité de commande de dispositif de signalisation acquiert un dispositif de signalisation correspondant aux informations de dispositif de signalisation dans le système de verrouillage ; et
l'unité de commande de signal commande le fonctionnement du dispositif de signalisation.
